# EUROPEAN PATENT APPLICATION

(11) **EP 4 335 673 A1**
(43) Date of publication of application: **13.03.2024**
(21) Application number: 23195482.7
(22) Date of filing: 05.09.2023
(51) Int. Cl.: B60J 1/10, B60J 10/30, B60J 10/00, B60J 10/76, B60J 10/79, B60J 10/78

(54) **TRIANGULAR WINDOW ASSEMBLY AND AUTOMOBILE WITH SAME**

(30) Priority: 06.09.2022 CN 202222368146 U
(71) Applicant: Henniges China Sealing Systems Co, Ltd, Beijing 100023 (CN); Henniges Automotive Sealing System Tieling Co, Ltd., Tieling Liaoning (CN); Henniges Taicang Sealing System Co, Ltd, Taicang City (CN)
(72) Inventor: LIANG, Jiangwei, Beijing 100023 (CN); XI, Haipo, Beijing 100023 (CN); SUN, Shiqi, Beijing 100023 (CN)
(74) Representative: McDonough, Jonathan

(57) **Abstract**

A quarter window assembly comprising a triangular glass, a guide rail, a sealing member and fixing assembly; the guide rail is provided with groove and a fixing portion disposed close to the groove; the sealing member is snapped into the groove, and a side edge of the triangular glass is fixed on the fixing portion and abuts against the sealing member; the fixing assembly includes a lifting member and a fixing bracket, the lifting member is disposed on a bottom edge of the triangular glass and is suitable for being fixed on the door sheet metal, and the fixing bracket is disposed on the guide rail and is suitable for being fixed on the door sheet metal. The present utility model improves the quarter window assembly, improves the sealing performance of the quarter window glass, and meanwhile achieves the effect that a product is free of frames and zero step difference.

## Description

### Technical Field

The present utility model relates to the technical field of automotive manufacturing, and in particular to a quarter window assembly and an automobile with the same.

### Background

The A-pillar quarter window assembly of the existing automobile includes an internal guide rail, a guide groove, an external guide rail, rubber quarter windows and quarter window glass, and the like The side edge grooves of the rubber quarter window are snap-fitted with the quarter window glass, the exterior rail is vertically snapped into the interior guide rail, the protruding structure on one side of the outer guide rail is snap-fitted with the bottom of the guide groove, and one side of the outer guide rail is in contact with the buffer rib at the bottom of the rubber quarter window. Its installation step is as follows: firstly, assembling and fixing the inner guide rail and the rubber quarter window, secondly, and connecting the fasteners at both ends of the inner guide rail to the door panel, pushing the rubber quarter window into the door frame along the width direction of the vehicle body and fastening with screws, then snapping the guide groove into the groove of the inner guide rail, and finally, pushing the outer guide rail into a snapping slot at the bottom of the inner guide rail along the assembly direction, and the spring plate of the inner guide rail automatically springs into the notch. The entire installation process is relatively cumbersome, and the manufacturing efficiency is low, and no sealing structure is provided between the quarter window glass and the guide rail, so that the overall sealing performance of the quarter window is relatively poor.

### Summary

The main purpose of the present utility model is to provide a quarter window assembly and an automobile with the same, aiming to improve the convenience of installation of the quarter window, improve the sealing performance of the quarter window, and achieve the effect of zero step difference at the same time.

In order to achieve the above purpose, the present utility model proposes a quarter window assembly, including
a triangular glass;
a guide rail provided with a groove and a fixing portion disposed close to the groove;
a sealing member snapped into the groove, a side edge of the triangular glass is fixed on the fixing portion and abuts against the sealing member; and
a fixing assembly including a lifting member and a fixing bracket, the lifting member is disposed on the bottom edge of the triangle glass and is suitable for being fixed on the door sheet metal, and the fixing bracket is disposed on the guide rail and is suitable for fixing on the door sheet metal.

Optionally, the sealing member comprises a first sealing strip and a second sealing strip connected with the first sealing strip.

Optionally, the materials of the first sealing strip and the second sealing strip are both elastomers.

Optionally, the guide rail is provided with a limit opening, and a snapping block 301 snap-fitted with the limiting opening is disposed at the position of the sealing member corresponding to the limiting opening, and the snapping block is snapped into the limiting opening to limit the movement of the sealing member along the length direction of the guide rail.

Optionally, the guide rail has a supporting section and a sealing section, the sealing section is suitable for slidingly mating and sealingly connected with the lifting glass, and side edge of the triangular glass is fixed on the supporting section, the first sealing strip is located on the supporting section, and the second sealing strip is located on the sealing section.

Optionally, the fixing portion is a connecting arm disposed on the supporting section and adjacent to the groove, and the side edge of the triangular glass is bonded on the connecting arm.

Optionally, the triangular glass and the lifting member are bonded and fixed by structural glue.

Optionally, the fixing bracket and the guide rail are fixed by riveting or welding.

Optionally, the lifting member and the fixing bracket each are provided with connecting holes for screws to pass through.

In order to achieve the above object, the present utility model also proposes an automobile including the quarter window assembly as described above, and the quarter window assembly includes:
a triangular glass;
a guide rail provided with a groove and a fixing portion disposed close to the groove;
a sealing member snapped into the groove, a side edge of the triangular glass is fixed on the fixing portion and abuts against the sealing member; and
a fixing assembly including a lifting member and a fixing bracket, the lifting member is disposed on the bottom edge of the triangle glass and is suitable for being fixed on the door sheet metal, and the fixing bracket is disposed on the guide rail and is suitable for fixing on the door sheet metal.

In the technical solution of the present utility model, the quarter window assembly comprises a triangular glass, a guide rail, a sealing member and fixing assembly; the guide rail is provided with groove and a fixing portion disposed close to the groove; the sealing member is snapped into the groove, and a side edge of the triangular glass is fixed on the fixing portion and abuts against the sealing member; the fixing assembly includes a lifting member and a fixing bracket, the lifting member is disposed on a bottom edge of the triangular glass and is suitable for being fixed on the door sheet metal, and the fixing bracket is disposed on the guide rail and is suitable for being fixed on the door sheet metal. During assembly, the lifting member can be fixed on the bottom edge of the triangular glass by the way of bonding or snapping, and the like in advance, and the fixing bracket is fixed on the guide rail by the way of welding or riveting, or the like, then the sealing member is snapped or bonded in the groove of the guide rail and the side edge of the triangular glass is fixed on the fixing portion of the guide rail by bonding and the like to assemble into the whole quarter window assembly. The whole assembly process is relatively simple, improving the convenience of installation of the quarter window.

At the same time, only a side edge of the triangular glass is fixed on the guide rail, and the bottom edge of the triangular glass is carried by the lifting member, so that the whole quarter window achieves a frameless effect, and side edge of the triangular glass can be fixed on the guide rail by bonding, so that the surface of the guide rail can be flush with the surface of the triangular glass, achieving the effect of zero step difference and improving the overall aesthetics.

### Brief Description of the Drawings

In order to illustrate the technical solutions in the embodiments of the present utility model or the prior art more clearly, the following will briefly introduce the accompanying drawings that need to be used in the description of the embodiments or the prior art. Obviously, the accompanying drawings in the following description are only some embodiments of the present utility model, and it is also possible for those skilled in the art to obtain other drawings according to the structures shown in these drawings without creative work.
Fig. 1 is a front view of an embodiment of a quarter window assembly of the present utility model;
Fig. 2 is a back view of an embodiment of a quarter window assembly of the present utility model;
Fig. 3 is a cross-sectional view at A-A in Fig. 2;
Fig. 4 is a cross-sectional view at B-B in Fig. 2;
Fig. 5 is a structural schematic view of the seal in an embodiment of the quarter window assembly of the present utility model;
Fig. 6 is a cross-sectional view at C-C in Fig. 5;
Fig. 7 is a cross-sectional view at D-D in Fig. 5;
Fig. 8 is a cross-sectional view at E-E in Fig. 5;
Fig. 9 is a cross-sectional view at F-F in Fig. 5.

Illustration of reference numbers:
10. triangular glass; 20. guide rail; 30. sealing member; 40. fixing assembly; 20a. groove; 21. fixing portion; 41. lifting member; 42. fixing bracket; 31. first sealing strip; 32. second sealing strip; 20b. limit opening; 301. snapping block; 21. supporting section; 22. sealing section.

The realization of the purpose, functional characteristics and advantages of the present utility model will be further illustrated in conjunction with the embodiments and with reference to the accompanying drawings.

### Detailed Description

The technical solutions in the embodiments of the present utility model will be clearly and completely described below in conjunction with the accompanying drawings in the embodiments of the present utility model. Obviously, the described embodiments are only a portion of the embodiments of the present utility model, not all of them. Based on the embodiments in the present utility model, all other embodiments obtained by persons of ordinary skill in the art without making creative efforts belong to the scope protected by the present utility model.

It should be noted that if there is a directional indication (such as up, down, left, right, front, back...) involved in the embodiment of the present utility model, the directional indication is only used to explain the relative positional relationship, motion conditions, etc. between the components in a certain posture (as shown in the accompanying drawing). If the specific posture changes, the directional indication will also change therewith accordingly.

In addition, if there are descriptions involving "first", "second", etc. in the embodiments of the present utility model, the descriptions of "first", "second", etc. are for descriptive purposes only, and cannot be understood indicate or suggest their relative importance or implying the number of technical features indicated. Thus, the features defined with "first" and "second" may explicitly or implicitly include at least one of these features. In addition, if "and/or" appearing in the whole text means including three parallel schemes, then taking "A and/or B" as an example, it includes scheme A, or scheme B, or a scheme that both A and B are satisfied simultaneously. In addition, the technical solutions of the various embodiments can be combined with each other, but must take that those skilled in the art can realize as a basis. When the combination of technical solutions is contradictory or cannot be realized, such a combination of technical solutions should be considered to be absent, and to be not within the protection scope claimed by the present utility model, either.

The present utility model provides a quarter window assembly, especially an A-pillar quarter window of an automobile, but not limited to this.

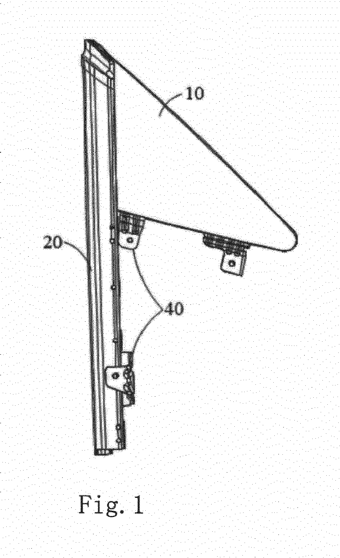

Referring to Fig. 1 to Fig. 4, in an embodiment of the present utility model, this quarter window assembly comprises a triangular glass 10, a guide rail 20, a sealing member 30 and fixing assembly 40; the guide rail 20 is provided with groove 20a and a fixing portion 21 disposed close to the groove 20a; the sealing member 30 is snapped into the groove 20a, and a side edge of the triangular glass 10 is fixed on the fixing portion 21 and abuts against the sealing member 30; the fixing assembly 40 includes a lifting member 41 and a fixing bracket 42, the lifting member 41 is disposed on a bottom edge of the triangular glass 10 and is suitable for being fixed on the door sheet metal, and the fixing bracket 42 is disposed on the guide rail 20 and is suitable for being fixed on the door sheet metal.

In this embodiment, the guide rail 20 can be disposed in a long strip shape, and it can be made of metal material, especially aluminum, but not limited to this.

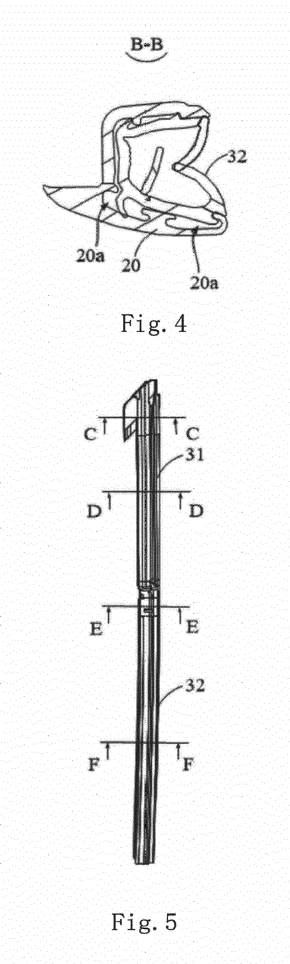

Referring mainly to FIG. 5, the sealing member 30 may include at least one sealing strip, which may consist of a first sealing strip 31 and a second sealing strip 32, which may be separately extruded and then connected together by injection molding. The material of the first sealing strip 31 and the second sealing strip 32 each can be elastomer, especially EPDM, but not limited to this.

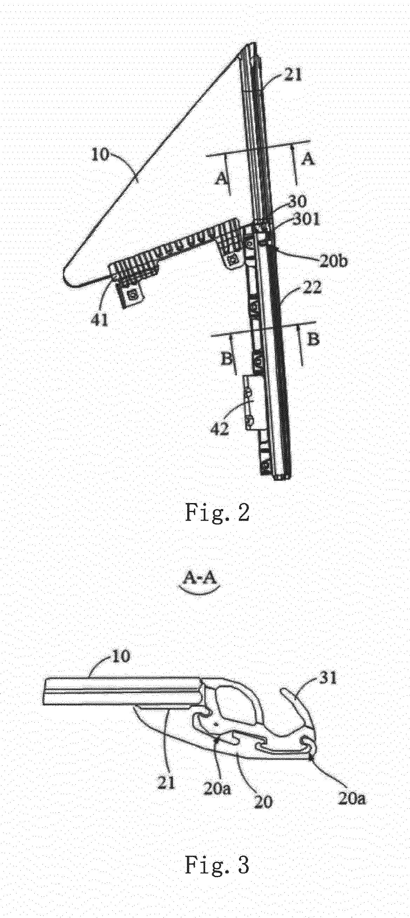

Referring to Fig. 1 and Fig. 2, both the lifting member 41 and the fixing bracket 42 each can be hardware parts, which can be a single component or a component assembled from multiple parts, but not limited to this. Wherein, the triangular glass 10 and the lifting member 41 are bonded and fixed by structural glue. The lifting member 41 can comprise a base plate, and a side plate disposed at the upper end of base plate, the number of the side plate can be one or two, the base plate is fitted with the bottom edge of triangular glass 10 to hold up triangular glass 10, and the side plate is fitted with the sidewall of the bottom end of triangular glass 10 to avoid the movement of the triangular glass 10 along its thickness direction.

In order to facilitate the installation of the quarter window assembly on the door sheet metal, referring to Fig. 1 and Fig. 2, in the present embodiment, the lifting member 41 and the fixing bracket 42 each are provided with connecting holes for screws to pass through, so as to assemble this quarter window assembly at a corresponding position of the door sheet metal.

During assembly, the lifting member 41 can be fixed on the bottom edge of the triangular glass 10 by the way of bonding or snapping, and the like in advance, and the fixing bracket 42 is fixed on the guide rail 20 by the way of threaded connection, riveting, welding or snapping, or the like, then the sealing member 30 is snapped or bonded in the groove 20a of the guide rail 20, and the side edge of the triangular glass 10 is fixed on the fixing portion 21 of the guide rail 20 by bonding or snapping, and the like to assemble into the whole quarter window assembly. The whole assembly process is relatively simple, improving the convenience of installation of the quarter window.

In addition, only a side edge of the triangular glass 10 is fixed on the guide rail 20, and its bottom edge is carried by the lifting member 41, so that the whole quarter window achieves a frameless effect, and side edge of the triangular glass 10 can be fixed on the guide rail 20 by bonding, so that the surface of the guide rail 20 can be flush with the surface of the triangular glass 10, achieving the effect of zero step difference and improving the overall aesthetics.

In order to avoid sealing failure to improve the stability of the quarter window assembly, referring to Fig. 2, in an embodiment, the guide rail 20 is provided with a limiting opening 20b; a snapping block 301 snap-fitted with the limiting opening 20b is disposed at the position of the sealing member 30 corresponding to the limiting opening 20b, and the snapping block 301 is snapped into the limiting opening 20b to limit the movement of the sealing member 30 along the length direction of the guide rail 20.

In this embodiment, the guide rail 20 has a supporting section 21 located in its upper half and a sealing section 22 located in its lower half. The sealing section 22 is suitable for slidingly mating and sealingly connected with the lifting glass, and the side edge of the triangular glass 10 is fixed on the supporting section 21, the first sealing strip 31 is located on the supporting section 21, and the second sealing strip 32 is located on the sealing section 22 and is suitable for sealing the gap between the guide rail 20 and the side edge of the lift glass.

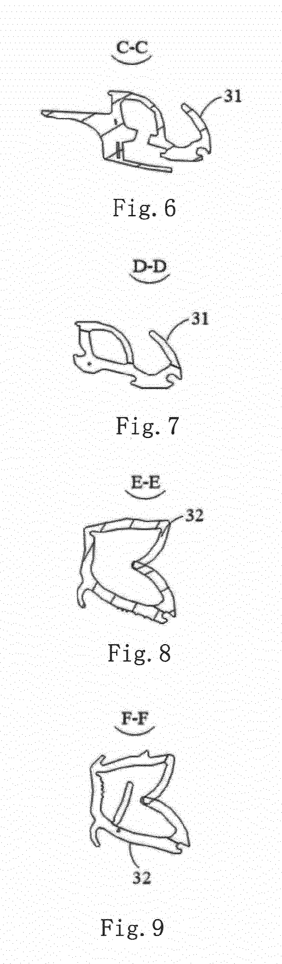

In this embodiment, as shown in Fig. 6, the cross-section of the top end of the first sealing strip 31 can be provided with two semi-closed deformation chambers, and the opening directions of the two deformation chambers are opposite; as shown in Fig. 7, the cross-section of the middle portion of the first sealing strip 31 can be provided a closed deformation chamber and a semi-closed deformation chamber located on the same side; as shown in Fig. 8, the cross-section of the top end the second sealing strip 32 can be provided with a closed deformation chamber; as shown in Fig. 9, the cross-section of the middle portion of the second sealing strip 32 can be provided with a closed deformation chamber, and a stop rib is disposed within the deformation chamber, so that when the surrounding wall of the sealing strip is squeezed, its deformation is reduced. As such, the sealing performance of all parts of the quarter window assembly can be further improved, ensuring that it can have stronger rainproof and windproof capabilities.

Referring to Fig. 3, in an embodiment, the fixing portion 21 can be a connecting arm that is disposed on the supporting section 21 and adjacent to the groove 20a, the side edge of the triangular glass 10 is bonded on the connecting arm, and these two parts can be fixed together by PU injection molding process.

The present utility model also proposes an automobile, which includes a quarter window assembly, the specific structure of which refers to the above-mentioned embodiments. Since the automobile proposed by the present utility model includes all the solutions of all the embodiments of the above-mentioned quarter window assembly, it has at least the same technical effect as that of the quarter window assembly, which will not be elaborated here one by one.

What is described above is only an optional embodiment of the present utility model, and does not therefore limit the patent scope of the present utility model. Under the inventive concept of the present utility model, the equivalent structural transformation made by using the specification and the contents of the accompanying drawings of the present utility model, or their direct/indirect applications in other related technical fields are all included in the patent protection scope of the present utility model.

## Claims

1. A quarter window assembly, **characterized in that**, comprising
a triangular glass;
a guide rail provided with a groove and a fixing portion disposed close to the groove;
a sealing member snapped into the groove, a side edge of the triangular glass is fixed on the fixing portion and abuts against the sealing member; and
a fixing assembly including a lifting member and a fixing bracket, the lifting member is disposed on the bottom edge of the triangle glass and is suitable for being fixed on a door sheet metal, and the fixing bracket is disposed on the guide rail and is suitable for fixing on the door sheet metal.

2. The quarter window assembly according to claim 1, **characterized in that**, the sealing member comprises a first sealing strip and a second sealing strip connected with the first sealing strip.

3. The quarter window assembly according to claim 2, **characterized in that**, the materials of the first sealing strip and the second sealing strip are both elastomers.

4. The quarter window assembly according to claim 2, **characterized in that**, the guide rail is provided with a limit opening, and a snapping block snap-fitted with the limiting opening is disposed at the position of the sealing member corresponding to the limiting opening, and the snapping block is snapped into the limiting opening to limit the movement of the sealing member along the length direction of the guide rail.

5. The quarter window assembly as claimed in claim 2, **characterized in that**, the guide rail has a supporting section and a sealing section, the sealing section is suitable for slidingly mating and sealingly connected with the lifting glass, and side edge of the triangular glass is fixed on the supporting section, the first sealing strip is located on the supporting section, and the second sealing strip is located on the sealing section.

6. The quarter window assembly according to claim 5, **characterized in that**, the fixing portion is a connecting arm disposed on the supporting section and adjacent to the groove, and the side edge of the triangular glass is bonded on the connecting arm.

7. The quarter window assembly according to claim 1, **characterized in that**, the triangular glass and the lifting member are bonded and fixed by structural glue.

8. The quarter window assembly according to claim 1, **characterized in that**, the fixing bracket and the guide rail are fixed by riveting or welding.

9. The quarter window assembly according to claim 1, **characterized in that**, the lifting member and the fixing bracket each are provided with connecting holes for screws to pass through.

10. An automobile, **characterized in that**, comprising the quarter window assembly according to any one of claims 1-9.
